Europäisches Patentamt

**European Patent Office**

**Office européen des brevets**

(19)

(11) Veröffentlichungsnummer: **0 259 733**
**B1**

(12) **EUROPÄISCHE PATENTSCHRIFT**

(45) Veröffentlichungstag der Patentschrift:
**10.01.90**

(51) Int. Cl.⁴: **B 65 G 47/31, B 65 B 23/12**

(21) Anmeldenummer: **87112632.2**

(22) Anmeldetag: **29.08.87**

(54) Verfahren und Vorrichtung zum Fördern stückiger Güter und zum organisierten Verändern ihrer Lage.

(43) Veröffentlichungstag der Anmeldung:
**16.03.88 Patentblatt 88/11**

(45) Bekanntmachung des Hinweises auf die Patenterteilung:
**10.01.90 Patentblatt 90/2**

(84) Benannte Vertragsstaaten:
**AT BE CH ES FR GB IT LI LU NL SE**

(56) Entgegenhaltungen:
**DE-A- 2 711 039**
**DE-A- 3 226 588**
**US-A- 4 016 788**

(73) Patentinhaber: **H. Bahlsens Keksfabrik KG,**
**Podbielskistrasse 289, D-3000 Hannover (DE)**

(72) Erfinder: **Raschke, Hans-Dieter, Dr.,**
**Podbielskistrasse 11, D-3000 Hannover (DE)**

## Beschreibung

Die Erfindung betrifft ein Verfahren zum Fördern stückiger Güter und zum organisierten Verändern ihrer Lage, insbesondere von Produkten der Nahrungsmittelindustrie, bei dem die Güter von einem Zuaufförderer auf eine Fördereinrichtung gefördert werden, bei dem auf der Fördereinrichtung die Güter in eine vorbestimmbare Lage zueinander gebracht werden und bei dem danach die Güter von einem nachfolgenden Abtransportförderer ihrer Weiterbehandlung, z. B. in einer Verpackungsmaschine, zugeführt werden.

Die Erfindung betrifft auch eine Vorrichtung zur Durchführung des Verfahrens, mit Zuaufförderer, mit Fördereinrichtung zum Fördern der stückigen Güter bei gleichzeitiger organisierter Veränderung der Lage der Güter und mit Abtransportförderer.

Die Verarbeitung von in unregelmässiger Folge eintreffenden Stücken, z. B. Gebäckstücken auf automatischen Verarbeitungsmaschinen, beispielsweise Verpackungsmaschinen, die die zeitlich konstante Ankunft der Stücke oder Gruppierungen von Stücken voraussetzen, z. B. Schlauchbeutelmaschinen, Einpacker etc., erfordert häufig ein manuelles Umgruppieren oder Sammeln, z. B. Stauen und anschliessendes Vereinzeln der Stücke, damit z. B. jedes Kettenfach einer nachfolgenden Verpackungsmaschine belegt werden kann.

Das Problem wird komplexer, wenn die Stücke in mehreren Spuren und in jeder dieser Spuren in unregelmässiger, d. h. zufallsbehafteter Folge eintreffen, einer weiterverarbeitenden Maschine aber beispielsweise in Längs- und Querrichtung geordnete Reihen mit bestimmten Abständen zugeführt werden müssen und das Aufstauen der Stücke zwecks anschliessender Separierung in Reihen deshalb nicht möglich ist, weil die Stückeigenschaften (Form, Empfindlichkeit, Klebrigkeit usw.) dies nicht zulassen.

Ein gebräuchliches Verfahren, in mehreren Spuren unregelmässig zulaufende Stücke in Querreihen umzuformen, ist es, die Stücke an einem Balken oder an Sperren auszurichten oder aufzustauen und die Reihen abzutakten. Dies ist nur bei Stücken fester Konsistenz und bestimmter Geometrie möglich.

Für den Fall, dass die Stücke streng periodisch, d. h. in Laufrichtung gesehen mit konstanten Abständen zugeführt werden, beschreiben die gattungsgemässe DE-OS 27 11 039 und auch die DE-OS 31 47 590 einander ähnliche Einrichtungen, bei denen ein zwischen zwei Förderern verschiebbarer Spalt periodisch mittels Kurven, Zugmitteln oder Fluidzylindern bewegt wird, und zwar jeweils mitlaufend genau zwischen zwei Gruppen von Stücken, die voneinander getrennt werden sollen, so, dass durch zeit- oder werkstückgesteuerte Variation der Fördergeschwindigkeiten die Gruppenbildung vollzogen werden kann.

Die genannten Einrichtungen vermögen es nicht, Gruppen aus Stücken zu bilden, welche mit unregelmässigen Abständen, insbesondere zufallsbehafteten, zugeführt werden.

Die Möglichkeit, zufällige Schwankungen in der Produktzufuhr auszugleichen, wird für die in der DE-OS 23 33 734 beschriebenen Einrichtung erörtert und es wird völlig richtig die Notwendigkeit genannt, die Produktzufuhr durch Ein- bzw. Ausschalten der vorgelagerten Maschine bedarfsgemäss zu beeinflussen. Diese Vorrichtung muss funktionsgemäss für jedes am Auslauf ausgesteuerte Stück ein neues Stück am Einlauf zulassen bzw. anfordern, wobei sie dann in der Lage ist, einen zeitlichen Versatz des einlaufenden Stückes auszugleichen.

Alle in den genannten Schriften beschriebenen Einrichtungen verwenden einen zwischen zwei Förderern verschieblichen Übergang als Übergabestelle, sowie variable Fördergeschwindigkeiten. Damit haben sie nur eine kurzfristig verteilende Funktion, welche sich zur Umgruppierung regelmässig zugeführter oder bedarfsgerecht abgerufener Stücke eignet, nicht aber eine gleichzeitig puffernde Funktion, die bei Überführung einer zufälligen in eine regelmässige Ordnung der Stücke erforderlich ist.

Ausgehend von den oben beschriebenen Nachteilen liegt der Erfindung nunmehr die Aufgabe zugrunde, ein Verfahren und eine Vorrichtung zur Verfügung zu stellen, womit es ermöglicht wird, bei kostengünstiger Arbeitsweise und relativ einfacher Vorrichtung stückige Güter auch in mehreren Spuren organisiert in ihrer Lage zu verändern, wobei die Güter in jeder willkürlichen Lage zueinander, bei bekannter mittlerer Ankunftsrate, auf einer Fördereinrichtung ankommen können.

Die Aufgabe wird dadurch gelöst,

dass die Güter auf beliebig vielen parallelen Spuren, bestehend aus Zuaufförderer, Fördereinrichtung und Abtransportförderer, gefördert werden und nach dem organisierten Verändern ihrer Lage die Stücke jeder Spur getrennt oder gemeinsam der Weiterbehandlung zugeführt werden,

dass die Lage der Güter mit mindestens einem Sensor mindestens an der Übergabestelle von Zuaufförderer zu Fördereinrichtung erfasst wird,

dass die Güter bei bekannter mittlerer Ankunftsrate in zufälligen, auch unterschiedlichen Abständen der Fördereinrichtung zugeführt werden, wobei die Abstände sowohl von Spur zu Spur als auch auf jeweils ein und demselben Zuaufförderer verschieden sein können,

dass eine Fördereinrichtung mit mindestens zwei in Förderrichtung bzw. zurückbeweglichen Übergängen pro Spur verwendet wird, und

dass durch Verändern der Lage jedes Überganges sowie der Fördergeschwindigkeiten innerhalb der aus mindestens zwei Förderern bestehenden Fördereinrichtung jedes Stück oder Gruppen von Stücken während einer bestimmten Zeit oder Wegstrecke getrennt von anderen Stücken oder Gruppen von Stücken auf anderen Spuren oder auch auf derselben Spur in der Lage verändert, das heisst beschleunigt oder verzögert wird.

Bezüglich der Vorrichtung ist die Lösung der Aufgabe darin zu sehen,

dass Sensoren zur steuerungstechnischen Erfassung der Güter angeordnet sind,

dass die Fördereinrichtung aus beliebig vielen Spuren besteht,

dass in jeder Spur mindestens drei Förderer vorhanden sind,

dass die Förderer in einer Vorrichtung fester Länge hintereinander angeordnet sind,

dass zwischen jeweils zwei benachbarten Förderern einer Spur ein Übergang vorhanden ist,

dass die Übergänge zwischen den Förderern in oder entgegengesetzt zur Förderrichtung bewegbar sind,

dass die Geschwindigkeit der einzelnen Förderer in verschiedenen Spuren gleichzeitig oder unabhängig voneinander veränderbar ist,

dass die Geschwindigkeit der einzelnen Förderer in der gleichen Spur unabhängig voneinander veränderbar ist.

Vorteilhafte Ausgestaltungen und Weiterbildungen der Erindung sind den Unteransprüchen entnehmbar.

Durch die Erfindung wird es möglich, Stücke, die unregelmässig, einer Verteilung gehorchend, nacheinander und in beliebig vielen Spuren nebeneinander ankommen, untereinander berührungsfrei so in ihrer Lage zu verändern, dass am Ausgang der Einrichtung in Längs- und Querrichtung geordnete Reihen, Staffeln oder Gruppierungen beliebiger Art, auch in periodischer Wiederholung, erscheinen.

Die erfindungsgemässe Anordnung der Vorrichtungsteile führt zu geringem fertigungstechnischen Aufwand und vermeidet insbesondere den Nachteil der in der DE-OS 27 11 039 beschriebenen Einrichtung, dass nämlich der Antrieb der zu verschiebenden Rollenpaare, der über nur einen Trum des Gurtes zur Wirkung gebracht wird, den doppelten Weg wie der zu verschiebende Spalt oder Übergang zurücklegt, was, da diese Verschiebeeinrichtung im Bandkörper untergebracht werden muss, die Fahrstrecke des Bandspaltes auf höchstens die Hälfte der Baulänge des Förderers einschränkt. Noch stärker verringert sich die Nutzung der aktiven Länge des Förderers bei der in der DE-OS 31 47 590 beschriebenen Bauweise durch die Anordnung sämtlicher verschieblicher Rollen auf einem Wagen und durch die damit fluchtende Anordnung des Linearantriebes. Die genannten Vorteile der erfindungsgemässen Einrichtung gelten in gleicher Weise auch für konstruktive Varianten.

Nachfolgend wird die Erfindung anhand von Ausführungsbeispielen mittels der Zeichnung näher erläutert.

Es zeigen:

Fig. 1: eine erfindungsgemässe Vorrichtung schematisch in Seitenansicht,

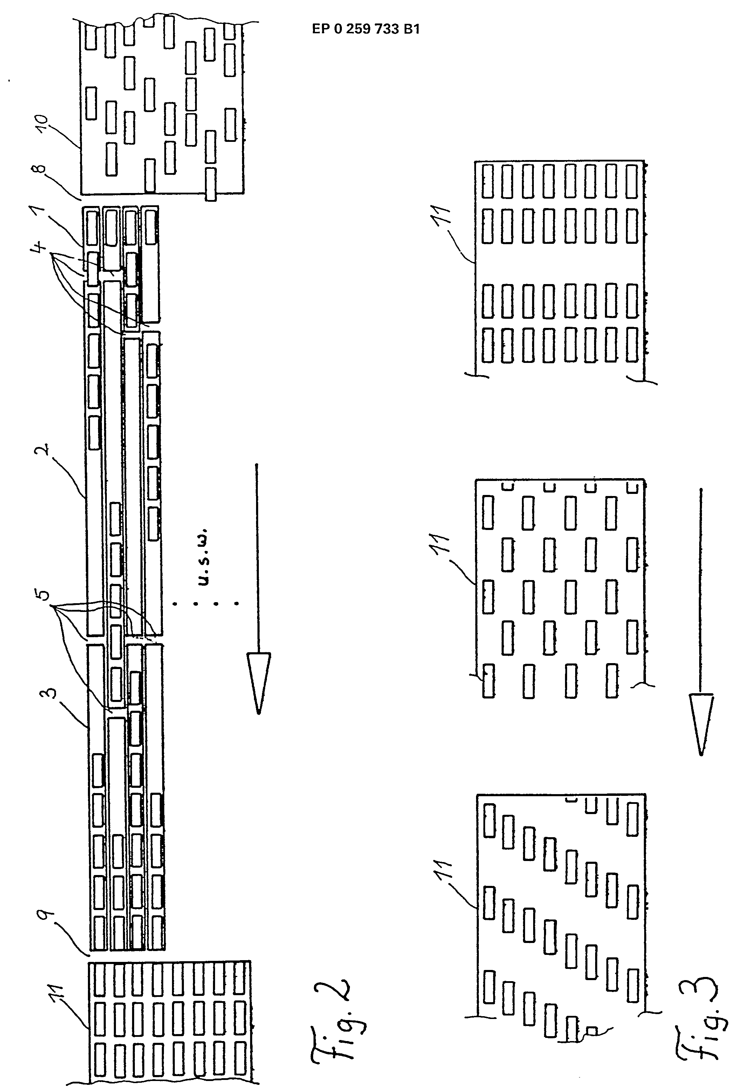

Fig. 2: eine Vorrichtung gemäss Fig. 1 in Draufsicht,

Fig. 3: mögliche Formationen nach dem Organisieren der Güter,

Fig. 4: eine mögliche Detailkonstruktion aus Fig. 1,

Fig. 5: eine Schemaskizze der Kinematik der Übergänge,

Fig. 6: eine Seitenansicht eines Ausführungsbeispiels mit zwei synchron arbeitenden Teilförderern in Schema-Darstellung,

Fig. 7: eine Seitenansicht einer möglichen Ausführungsform nach Fig. 6.

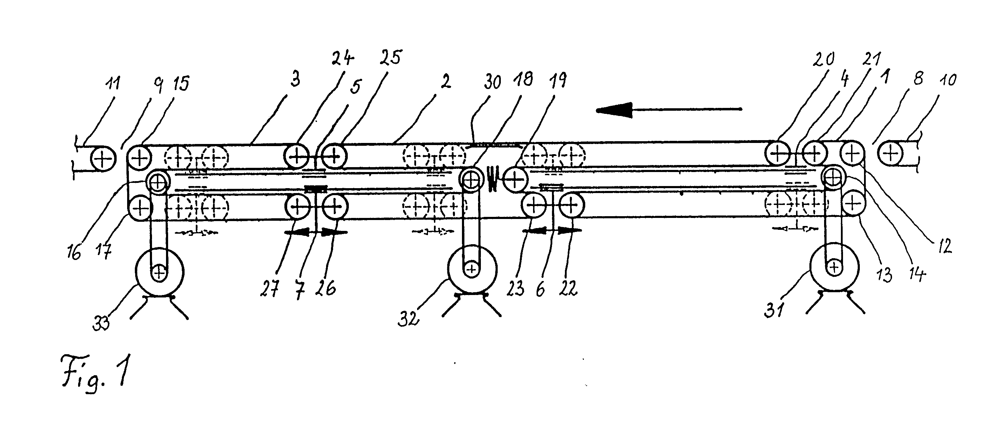

Gemäss Figur 1 werden drei Förderer 1, 2, 3, welche zwischeneinander zwei obere Übergänge 4 und 5, sowie zwei untere Übergänge 6 und 7 aufweisen, so in ein in gewöhnlicher Weise zu konstruierendes Gestell eingebaut, dass das zu fördernde Gut von einem Zulaufförderer 10 über die zugehörenden Förderer 1, 2, 3 auf den Förderer 11 zum Abtransport gelangt.

Die Förderer 1 und 3 mit den Festrollen 12-17 können baugleich und in spiegelbildlicher Anordnung verwendet werden. Ihr Antrieb erfolgt wahlweise über eine der Festrollen 12-17 durch drehzahlvariable Motoren 31 und 33.

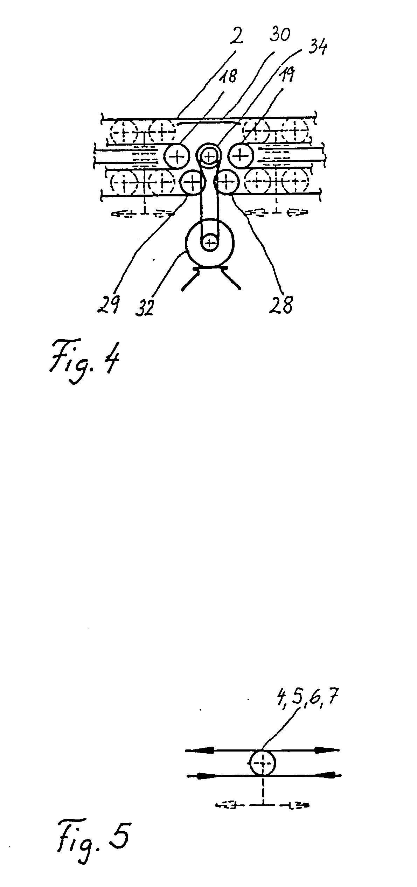

Der Förderer 2 kann für sich wiederum einen symmetrischen Aufbau aufweisen. Er wird über die Festrolle 18 ebenfalls durch einen drehzahlvariablen Motor 32 angetrieben. Bei schwerer Bauart kann vorteilhaft eine konstruktive Anordnug gemäss Figur 4 gewählt werden, die gegebenenfalls erforderliche grössere Durchmesser der Antriebsrolle 34 ermöglicht.

Die zwischen den Förderern 1-3 befindlichen Übergänge 4-7 sind so aufgebaut, dass jeweils die Achsen der Umlenkrollen eines Überganges miteinander verbunden sind und die Rollen gemäss Figur 1 gemeinsam in der Richtung des zu fördernden Gutes bewegt werden können.

Dank dieser Konstruktion können alle drei Förderer 1-3 allein durch die Spannrolle 19 mit der notwendigen Trumspannung beaufschlagt werden.

Die Anordnung der Förderer bewirkt nun weiterhin, dass bei Verschiebung eines der unteren Übergänge 6, 7, welche für die Anbringung eines linear wirkenden Antriebes gut zugänglich sind, sich die jeweils darüberliegenden Übergänge 4, 5 um die gleiche Wegstrecke — jedoch in umgekehrter Richtung — bewegen.

Dabei bleiben die Bewegungen der aneinandergekoppelten Übergänge 6 und 4 von den Bewegungen der ebenso aneinandergekoppelten Übergänge 7 und 5 unbeeinflusst, was auch umgekehrt der Fall ist. Ebenso bleiben die getrennt einstellbaren Geschwindigkeiten der drei Förderer 1, 2, 3 von Bewegungen der Übergänge unbeeinflusst.

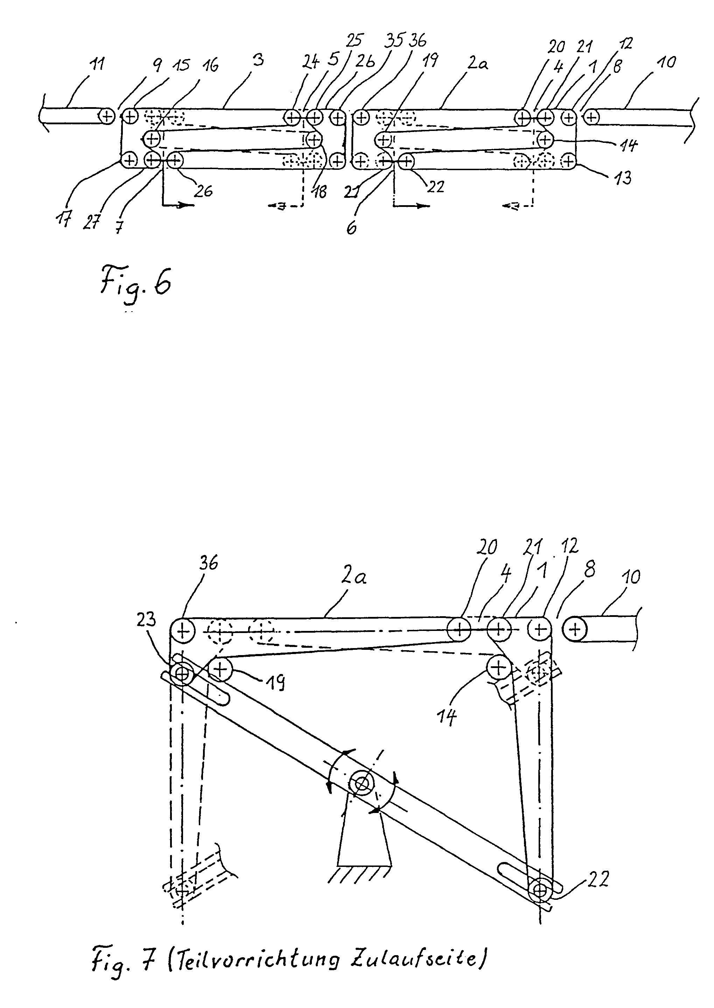

In den Figuren 6 und 7 sind zwei mögliche Ausführungsformen von zwei erforderlichen Schiebebandeinheiten dargestellt, wobei der Antrieb des Überganges durch eine Kurbelschwinge erfolgt. Die Rollen 35 und 36 erübrigen bei diesen Varianten den Einbau eines Stützbleches 30 gemäss Fig. 1 und Fig. 4. Bei diesen Ausführungen können vier völlig baugleiche Förderer in gezeigter Anordnung verwendet werden, und die zuvor beschriebenen Eingenschaften ergeben sich dann, wenn die beiden mittleren Förderer 2a und 2b synchron betrieben werden, d. h. zusammen die Funktion des Förderers 2 in Figur 1 übernehmen.

Die erfindungsgemässe Einrichtung lässt mehrere Funktionsabläufe zu, die zum selben Ergebnis führen. Es hat sich die im folgenden beschriebene Betriebsart bei Simulationsläufen auf einem Rechner gut bewährt, wobei es sich natürlich von selbst erklärt, dass die Fördereinrichtung fehlende Stücke nicht erzeugt bzw. überzählige Stücke, die die interne Pufferkapazität übersteigen, nicht wegnehmen kann. Dieses bedeutet, dass für jeden Platz der zu bildenden Formation innerhalb eines begrenzten Zeitraumes auch ein Stück am Einlauf der Vorrichtung zur Verfügung gestellt wird, d. h. die mittlere Ankunftsrate der Stücke muss der mittleren Abgangsrate der Stücke entsprechen. Ist dieses nicht der Fall, bleiben in der auslaufenden Gruppierung entweder unbesetzte Plätze oder es bedarf einer Einrichtung, die die Stücke auf die Anzahl reduziert, für die die Vorrichtung ausgelegt wurde. Wesentlich ist, dass die Stücke unregelmässig zugeführt werden können, z. B. gemäss einer Gaussverteilung. In der beispielhaft beschriebenen Ausführung der Vorrichtung für einen Durchsatz von 100 Reihen je Minute können beispielsweise bis zu fünf Stücke in unmittelbarer Folge, d. h. ohne Abstand der Stücke untereinander oder aber Lücken von ebenso vielen Stücken, die man sich im Abstand der mittleren Ankunftsrate ausgelegt denken darf, zugeführt werden, ohne dass Abweichungen von der gewählten Gruppierung im Auslauf auftreten.

Die Ankunfts- und Abgangsrate können — einander entsprechend — verändert werden. Es kann auch erforderlich sein, eine variable Ankunftsrate zu verarbeiten, dieses ist z. B. der Fall, wenn Schwankungen in der Produktionsmenge der vorgelagerten Maschinen auftreten. Es ist dann erforderlich, die Vorrichtung und die Steuerung für die grösste mögliche Ankunftsrate auszulegen. Es führen dann verringerte Zulaufmengen zu entsprechenden Lücken zwischen den Gruppierungen — im Extremfall zwischen einzelnen Reihen — im Auslauf.

Das Funktionsprinzip in einer einzelnen Spur ist:

I. eine festzulegende Anzahl von Stücken (vorzugsweise 5), die mit willkürlichem Abstand bei bekannter mittlerer Ankunftsrate die Einrichtung am Übergang 8 erreichen, auf dem Förderer 1 so hintereinander zu reihen, dass die Stücke einander nicht berühren, sondern ihr Abstand untereinander klein und von gleicher Länge ist;

II. die so gesammelte Gruppe von Stücken (Spiel) durch die mitlaufenden Übergänge 4 und 5 in der Bewegung getrennt von vorauslaufenden und nachfolgenden Gruppen auf den Förderer 2 zu transportieren, wobei die Stücke von diesem durch den vor der Gruppe herlaufenden Übergang 5 auf die auf dem Förderer 3 aus dem vorangegangenen Zyklus noch befindlichen Stücke aufgeschlossen werden, und

III. der Förderer 3 die Stücke in der gewünschten Folge über den Übergang 9 auf den Förderer 11 zum Abtransport auftaktet.

Dieses kann nun in beliebig vielen Spuren synchron oder in wählbarem zeitlichen Versatz erfolgen. Im einzelnen kommt es in jeder Spur in den I bis III beschriebenen Vorgängen zu folgenden Abläufen:

Ein Sensor, welcher eine Fotozelle sein kann, erkennt die vordere Kante eines Stückes, wenn dieses am Übergang 8 eintrifft. Die Steuerung lässt nun den Förderer 1 mit der Geschwindigkeit V 1 um den Betrag der Stücklänge weiterlaufen. Dabei kann die Länge der Stücke bekannt und konstant sein oder sie wird durch den erwähnten oder einen anderen Sensor beim Durchlauf ermittelt. Aufgrund nicht vermeidbarer Zeitkonstanten für das Anfahren und Bremsen der Förderelemente kann es erforderlich sein, dass zwischen den auf dem Förderer 1 aufzureihenden Stücken ein fester Abstand entsteht. Dieser Abstand kann auf einfache Weise dadurch hergestellt werden, dass die Geschwindigkeit V 1 des Förderers 1 gegenüber der des Zulaufförderers 10 um einen bestimmten Betrag grösser gewählt wird. (Die Geschwindigkeit V 1 soll bei den hier betrachteten Stücklängen von 60 mm und einem Durchsatz von 100 Stück je Minute und Spur vorzugsweise 12-15 m/min betragen.) Auf gleiche Weise kann dieser Abstand auch bereits auf Förderern erzeugt werden, die der Einrichtung vorgeschaltet sind.

Hat nun der Förderer 1 das erste Stück aufgenommen und folgt das zweite Stück unmittelbar dahinter, gegebenenfalls so, dass es das erste Stück berührt, so läuft der Förderer 1 ohne Halt mit V 1 weiter, bis er auch dieses Stück in seiner ganzen Länge aufgenommen hat, wobei ein Abstand zum ersten Stück entsteht. Dabei ist es erforderlich, dass der Übergang 4 gleichzeitig mit der Geschwindigkeit V 1 vor dem 1. Stück herläuft, damit die noch zu beschreibenden Transport- und Auftaktungsvorgänge auf den Förderern 2 und 3 sich von diesen Bewegungen unabhängig vollziehen können.

Der Förderer 1 läuft immer dann an, wenn ein Stück am Übergang 8 eintrifft, nimmt dieses auf und stoppt, solange kein weiteres Stück eintrifft, also auf dem Zulaufförderer, welcher mit konstanter Geschwindigkeit läuft, zwischen zwei Stücken eine Lücke existiert.

In gleicher Weise wie Förderer 1 taktet, bewegt sich auch der Übergang 4 jeweils vor dem ersten Stück her, bis der Förderer 2 von Stücken des vorausgehenden Spiels geräumt ist. Dann taktet der Förderer 2 synchron mit dem Förderer 1, um gegebenenfalls weitere Stücke aufzunehmen, und der Übergang 4 läuft unter den aufgereihten Stücken, ohne diese zu beeinflussen, mit erhöhter Geschwindigkeit — vorzugsweise V 2 = 2 V 1 — in seine Ausgangsposition zurück.

Da in der Anlaufphase ein vorauslaufendes Spiel nicht existiert, können die Übergänge 4, 5 für das erste Spiel in ihrer Ausgangslage verharren.

Damit wird die genannte Anzahl von Stücken auf den Förderern 1 bzw. 2 hintereinander in gleichmässigem Abstand aufgereiht.

Ist ein Spiel von 5 Stücken auf dem Förderer 2 gesammelt, beginnt für diese Stücke der Transport zur Abgabeseite der Einrichtung. Hierzu schaltet der Förderer 2 auf die Geschwindigkeit V 2 = 2 V 1 (ein sechstes Stück kann dann bereits auf dem Förderer 1 liegen, der wie oben beschrieben erneut zu sammeln beginnt, wobei der Spalt 4 seine Trennfunktion wahrnimmt). Erreicht das erste Stück den Übergang 5, so läuft dieser unmittelbar vor dem ersten Stück her, bis er das Ende des vorausgehenden Spiels erreicht, das sich noch teilweise zur Abtaktung auf dem Förderer 3 befinden kann. (Da sich in der Ablaufphase noch kein Stück auf dem Förderer 3 befindet, kann die Übergabe vom Förderer 2 auf den Förderer 3 stattfinden, ohne dass der Übergang 5 seine trennende Funktion erfüllt. Er verharrt beim ersten Spiel in der Ausgangsstellung.)

Der Förderer 2 wird nun synchron mit dem Förderer 3 geschaltet, und der Übergang 5 läuft mit vorzugsweise V 2 = 2 V 1 unter den Stücken in seine Ausgangslage zurück, so dass alle Stücke dieses Spiels nun zum Austakten auf dem Förderer 3 liegen. Spätestens mit diesem Vorgang hat sich auch der Rücklauf des Überganges 4 vollzogen, da zwangsläufig der Förderer 2 inzwischen geräumt sein muss. Ein neues Spiel kann damit transportiert werden.

Wird die Anlage mit mehreren Spuren betrieben, so laufen die Vorgänge «Sammeln» und «Transportieren» in den einzelnen Spuren unabhängig voneinander und aufgrund der zufälligen Ankünfte der Stücke zeitlich versetzt ab.

Im Gegensatz dazu vollzieht sich das Auftakten auf den Abgabeförderer 11 von den nebeneinander angeordneten Förderern 3 aller Spuren organisiert, d. h. nach gewünschter Belegung im Gleichtakt, im Wechseltakt oder in anderen Taktfolgen, wobei jedoch die Bedingung einzuhalten ist, dass in jeder Spur die mittlere Ankunftsrate der mittleren Abgangsrate entsprechen muss, damit einerseits nicht die Zahl der zum Abtakten auf dem Förderer 3 bereitliegenden Stücke die Kapazität dieses Förderers übersteigt und andererseits immer ein Stück zum Abtakten in jeder Spur zur Verfügung steht, also das gewünschte Belegungsmuster auf dem Abgabeförderer 11 lückenlos erzeugt werden kann.

Das Abtakten, z. B. in geschlossenen Querreihen, vollzieht sich vorzugsweise, indem die Steuerung wählbare Zeittakte vorgibt, in denen die Förderer 3 aller Spuren anlaufen und synchron jeweils ein Stück auf dem kontinuierlich laufenden Abgabeförderer 11 ablegen, dann anhalten, beim nächsten Zeittakt ein weiteres Stück ablegen, usw.

Die Förderstrecke je Anlauf des Förderers 3 kann dabei, wie auch die Sammel- und Transportvorgänge, von Fotozellen oder anderen Sensoren vorgenommen werden, die an den Übergängen montiert sind und die Anfang und Ende der Stücke an die Steuerung melden. Die Steuerung kann dann eine Ablaufsteuerung, beispielsweise eine speicherprogrammierbare Steuerung sein. Es kann aber auch vorteilhaft sein, durch Einsatz eines Prozessrechners die sensorische Überwachung zu reduzieren und im Extremfall nur eine Einmalerkennung jedes Stückes am Übergang 8 vorzunehmen.

Die Länge der einzelnen Bänder ist eine Funktion der Länge der Stücke, der Streuung der Ankünfte auf dem Zulaufförderer, der Häufigkeit der Ankünfte, der Reibwerte der Stücke gegenüber dem Förderer und den damit möglichen Beschleunigungen sowie der verwendeten Strategie zur Steuerung. Bei Stücklängen von 60 mm und einer Ankunftsrate von 100 Stück/min in jeder Spur gelten folgende Mindestlängen:

Förderer 1 in zusammengefahrenem Zustand: ca. 1 Stücklange       = 60 mm

Förderer 2 in beidseitig ausgefahrenem Zustand: ca. 15 Stücklängen für 1 Spiel aus 5 Stücken = 900 mm; in beidseitig zusammengefahrenem Zustand: ca. 2 Stücklängen       = 120 mm

Förderer 3 in ausgefahrenem Zustand: ca. 9 Stücklängen für 1,5 Spiele aus je 5 Stücken       = 540 mm.

Bei grosser Streuung der Ankünfte ist die Länge des Förderers 3 grösser zu wählen.

## Patentansprüche

1. Verfahren zum Fördern stückiger Güter und zum organisierten Verändern ihrer Lage, insbesondere von Produkten der Nahrungsmittelindustrie, bei dem die Güter von einem Zulaufförderer auf eine Fördereinrichtung gefördert werden,

bei dem auf der Fördereinrichtung die Güter in eine vorbestimmbare Lage zueinander gebracht werden und

bei dem danach die Güter von einem nachfolgenden Abtransportförderer ihrer Weiterbehandlung, zum Beispiel in einer Verpackungsmaschine, zugeführt werden, dadurch gekennzeichnet,

dass die Güter auf beliebig vielen parallelen Spuren, bestehend aus Zulaufförderer, Fördereinrichtung und Abtransportförderer, gefördert werden und nach dem organisierten Verändern ihrer Lage die Stücke jeder Spur getrennt oder gemeinsam der Weiterbehandlung zugeführt werden,

dass die Lage der Güter mit mindestens einem Sensor mindestens an der Übergabestelle von Zulaufförderer zu Fördereinrichtung erfasst wird,

dass die Güter bei bekannter mittlerer Ankunftsrate in zufälligen, auch unterschiedlichen Abständen der Fördereinrichtung zugeführt werden, wobei die Abstände sowohl von Spur zu Spur als auch auf jeweils ein und demselben Zulaufförderer verschieden sein können,

dass eine Fördereinrichtung mit mindestens zwei in Förderrichtung bzw. zurückbeweglichen Übergängen pro Spur verwendet wird, und

dass durch Verändern der Lage jedes Überganges sowie der Fördergeschwindigkeiten innerhalb der aus mindestens drei Förderern bestehenden Fördereinrichtung Stücke oder Gruppen von Stücken während einer bestimmten Zeit oder Wegstrecke getrennt von anderen Stücken oder Gruppen von·Stücken auf anderen Spuren oder auch auf derselben Spur in der Lage verändert, das heisst beschleunigt oder verzögert, werden.

2. Verfahren nach Anspruch 1, dadurch gekennzeichnet, dass das Signal des Sensors oder der Sensoren zur Steuerung der Lage der Übergänge und der Geschwindigkeit der Förderer verwendet wird.

3. Verfahren nach Anspruch 2, dadurch gekennzeichnet, dass die Steuerung mittels eines programmierbaren Rechners durchgeführt wird.

4. Vorrichtung zur Durchführung des Verfahrens nach Anspruch 1 mit Zulaufförderer (10), mit Fördereinrichtung zum Fördern der stückigen Güter bei gleichzeitiger organisierter Veränderung der Lage der Güter und mit Abtransportförderern (11), dadurch gekennzeichnet,
dass Sensoren zur steuerungstechnischen Erfassung der Güter angeordnet sind,
dass die Fördereinrichtung aus beliebig vielen Spuren besteht,
dass in jeder Spur mindestens drei Förderer (1, 2, 3) vorhanden sind,
dass die Förderer (1, 2, 3) in einer Vorrichtung fester Länge hintereinander angeordnet sind,
dass zwischen jeweils zwei benachbarten Förderern einer Spur ein Übergang (4) bzw. (5) vorhanden ist,
dass die Übergänge (4, 5) zwischen den Förderern in oder entgegengesetzt zur Förderrichtung bewegbar sind,
dass die Geschwindigkeiten der einzelnen Förderer (1, 2, 3) in verschiedenen Spuren gleichzeitig oder unabhängig voneinander veränderbar sind,
dass die Geschwindigkeiten der einzelnen Förderer (1, 2, 3) in der gleichen Spur unabhängig voneinander veränderbar sind.

5. Vorrichtung nach Anspruch 4, dadurch gekennzeichnet, dass die Förderer (1, 2, 3) auf beweglichen Umlenkrollen umlaufende Gurte sind.

6. Vorrichtung nach Anspruch 4 und/oder 5, dadurch gekennzeichnet, dass den Übergängen (4 bzw. 5) jeweils weitere Übergänge (6 bzw. 7) zugeordnet sind, wobei eine in die weiteren Übergänge (6 bzw. 7) eingeleitete Verschiebung eine gleiche, jedoch richtungsumgekehrte Verschiebung der ersten Übergänge (4 bzw. 5) bewirkt.

7. Vorrichtung nach Anspruch 6, dadurch gekennzeichnet, dass die Bewegung der Übergange (4 bzw. 6) zwischen den ersten und zweiten Förderern relativ zu der Bewegung der Übergänge (5 bzw. 7) zwischen den zweiten und dritten Förderern in voneinander abweichender Laufrichtung und Geschwindigkeit und über voneinander abweichenden Strecken erfolgt.

8. Vorrichtung nach einem der Ansprüche 4 bis 7, dadurch gekennzeichnet, dass die einzelnen Förderer (1, 2, 3) voneinander abweichende Gesamtlängen aufweisen.

9. Vorrichtung nach einem der Ansprüche 4 bis 8, dadurch gekennzeichnet, dass die Verschiebung der Übergänge durch Linearantriebe oder Antriebe mit Zugmitteln erfolgt.

10. Vorrichtung nach Anspruch 4 bis 9, dadurch gekennzeichnet, dass die Zugmittel der Förderer Gurte, Schnüre, Riemen, Zahnriemen oder Ketten auch in untereinander kombinierter Verwendung sind.

11. Vorrichtung nach einem der Ansprüche 4 bis 10, dadurch gekennzeichnet, dass die Trumspannung aller Förderer (1, 2, 3) einer Spur durch die Verschiebung von nur einer Rolle 19 erfolgt.

12. Vorrichtung nach einem der Ansprüche 4 bis 11, dadurch gekennzeichnet, dass der Antrieb des zweiten Förderers (2) bei schwerer Bauart über eine Rolle (34) erfolgt und weitere Rollen (28 und 29) vorhanden sind.

13. Vorrichtung nach einem der Ansprüche 4 bis 12, dadurch gekennzeichnet, dass die Zugmittel an den Übergängen (4 und 5) und gegebenenfalls an den weiteren Übergängen (6 und 7) über Räder, Rollen oder dergleichen geführt sind, die von einer gemeinsamen Welle getragen werden.

14. Vorrichtung nach einem der Ansprüche 4 bis 13, dadurch gekennzeichnet, dass die Steuerung der Vorrichtung, insbesondere der Laufrichtung der Übergänge (4, 5) und der Laufgeschwindigkeit der Übergänge (4, 5) und der Zugmittel der Förderer (1, 2, 3) adaptiv durch einen programmierbaren Rechner erfolgt und die sensorische Erfassung fotoelektrisch oder elektrisch erfolgt.

15. Vorrichtung nach einem der Ansprüche 4 bis 14, dadurch gekennzeichnet, dass der zweite Förderer (2) aus zwei Teilförderern (2a, 2b) besteht, die hintereinander angeodnet sind und deren Antrieb synchron erfolgt.

16. Vorrichtung nach einem der Ansprüche 4 bis 15, dadurch gekennzeichnet, dass nur eine einzelne Spur der beschriebenen Vorrichtung zur Beschickung der Kette, beispielsweise einer Verpackungsmaschine, verwendet wird.

**Claims**

1. Procedure to transport piece goods and for an organised alteration of their position, in particular for products in the foodstuffs industry in which the goods are transported from a feed transporter to a transportation plant,
in which the foods are brought into a predeterminable position relative to one another on the transportation plant,
in which the goods are then delivered by a subsequent discharge transporter for their further processing, for example into a packing machine, characterized by the fact that the goods are transported on a random number of parallel lanes, consisting of feed transporter, transportation plant and discharge transporter and after the organised alteration of their position, the pieces are delivered for further processing either jointly or separately,
the position of the goods is registered with at least one sensor, at least at the exchange point between the feed transporter and the transportation plant,
the goods are supplied to the transportation plant at known average rates of arrival at random, also different intervals, whereby the spaces can be different both from one lane to the next as well as on one and the same feed transporter,
a transportation plant is used with at least two transitions per lane which can be moved in the direction of transportation and in the reverse direction, and by altering the position of each transition as well as the speed of transportation within the transportation plant, which consists of at least three transporters, the position of pieces or groups of pieces can be altered, i. e. accelerated or retarded, during a certain time or over a certain distance, independently of other pieces or groups of pieces on other lanes, as well as on the same lane.

2. Procedure in accordance with claim 1, characterized by the fact that the signal from the sensor or sensors is used to control the position of the transitions and the speed of the transporter.

3. Procedure in accordance with claim 2, characterized by the fact that the control of the system is carried out by a programmable computer.

4. A device to carry out the procedure in accordance with claim 1 with feed transporter, with a transportation plant to transport the piece goods with a simultaneous organised alteration of the position of the goods and with a discharge transporter, characterized by the fact that

sensors are provided for a control engineering registration of the goods,

the transportation plant consists of a random number of lanes,

at least three transporters (1, 2, 3) are present in each lane,

the transporters (1, 2, 3) are arranged in sequence in a piece of equipment of a fixed length,

there is a transition (4) or (5) between each two neighbouring transporters of a lane,

the transitions (4, 5) between the transporters can be moved in the direction of transportation or in the opposite direction,

the speeds of the individual transporters (1, 2, 3) in different lanes can be altered simultaneously or independently of one another,

the speeds of the individual transporters (1, 2, 3) in the same lane can be altered independently of one another.

5. Device in accordance with claim 4, characterized by the fact that the transporters (1, 2, 3) are circular belts on movable deflection rollers.

6. Device in accordance with claim 4 and/or 5, characterized by the fact that

the transitions (4 or 5) are each allocated additional transitions (6 or 7), whereby a displacement begun in one of the additional transitions (6 or 7) effects the same, though directionally opposite displacement in the first transitions (4 or 5).

7. Device in accordance with one of the claims 4 to 6, characterized by the fact that the movement of the transitions (4 or 6) takes place relative to the movement of the transitions (5 to 7) in opposite directions and at different speeds and over distances which are also different from one another.

8. Device in accordance with one of the claims 4 to 7, characterized by the fact that the individual transporters (1, 2, 3) are different to one another in their overall lengths.

9. Device in accordance with one of the claims 4 to 8, characterized by the fact that the displacement of the transitions is carried out by linear drives or drives with traction mechanisms.

10. Device in accordance with claims 4 to 9, characterized by the fact that the traction mechanism used for the transporter consists of belts, cords, straps, toothed belts or chains or any combination of these.

11. Device in accordance with one of the claims 4 to 10, characterized by the fact that the belt tension of all transporters (1, 2, 3) of one lane is maintained by the displacement of only one roller 19.

12. Device in accordance with one of the claims 4 to 11, characterized by the fact that, the transporter's (2) drive in heavy-duty designs is by means of a rollers (34) and further rollers (28 and 29) are present.

13. Device in accordance with one of the claims 4 to 13, characterized by the fact that the traction mechanisms at the transitions (4 and 5) and, if necessary, at the additional transitions (6 and 7) are guided by wheels, rollers or the like, which are borne on a joint shaft.

14. Device in accordance with one of the claims 4 to 13, characterized by the fact that the control of the equipment, in particular the direction of running of the transitions (4, 5) and the running speed of the transitions (4, 5) and the traction mechanisms of the transporters (1, 2, 3) is carried out adaptively through a programmable computer and the sensory detection is carried out either photoelectrically or electrically.

15. Device in accordance with one of the claims 4 to 14, characterized by the fact that a transporter (2) consists of two partial transporters (2a, 2b) which are arranged one behind the other and whose drives are synchronous.

16. Device in accordance with one of the claims 4 to 15, characterized by the fact that only one single lane of the equipment described is used to charge the belt, for example of a packing machine.

## Revendications

1. Méthode d'acheminement de marchandises en morceaux et de changement organisé de leur position, en particulier pour les produits de l'industrie alimentaire,

par lequel les marchandises sont acheminées d'un transporteur d'amenée sur un dispositif d'acheminement,

par lequel les marchandises sont placées, ensemble, dans une position prédéterminable, et

par lequel, ensuite, les marchandises sont amenées d'un transporteur d'évacuation suivant à un autre conditionnement, par exemple dans une machine d'emballage, caractérisée par le fait,

que les marchandises sont acheminées sur un nombre quelconque de voies parallèles composées d'un transporteur d'amenage, d'un dispositif d'acheminement et d'un transporteur d'évacuation et que les pièces de chaque voie sont séparées après le changement organisé de leur position ou conduites ensemble à un autre conditionnement,

que la position des marchandises est saisie par au moins un capteur placé au point de déversement, du transporteur d'amenage au dispositif d'acheminement,

que les marchandises sont amenées, pour un taux d'arrivée moyen connu, à des intervalles aléatoires et aussi différents du dispositif d'acheminement, à l'occasion de quoi les intervalles peuvent être différents aussi bien de voie à voie que sur un même transporteur d'amenage,

qu'un dispositif d'acheminement est utilisé avec au moins deux passages par voie dans le dispositif d'acheminement en avant et en arrière, et

que, par le changement de position de chaque passage comme le changement des vitesses d'acheminement à l'intérieur du dispositif d'acheminement composé au moins de deux transporteurs, chaque pièce ou chaque groupe de pièces puissent être, pendant un temps et un intervalle déterminés, séparés d'autres pièces ou groupes de pièces, sur la même ou sur d'autres voies et puissent être changés dans leur position, c'est-à-dire accélérés ou ralentis.

2. Méthode d'après la spécification 1, caractérisée par le fait que le signal du capteur ou des capteurs est utilisé pour la commande de la position des passages et de la vitesse des transporteurs.

3. Méthode d'après la spécification 2, caractérisée par le fait que la commande est accomplie au moyen d'un ordinateur programmable.

4. Dispositif pour la réalisation de la méthode d'après la spécification 1, avec un transporteur d'amenage, avec un dispositif d'acheminement pour le transport des marchandises en morceaux par changement organisé et simultané de la position des marchandises et avec un transporteur d'évacuation, caractérisé par le fait

que des capteurs sont aménagés pour saisir techniquement des marchandises pour la commande,

que le dispositif d'acheminement est composé d'un nombre quelconque de voies,

qu'il y a au moins trois transporteurs (1, 2, 3) dans chaque voie,

que les transporteurs (1, 2, 3) sont aménagés les uns derrière les autres dans un dispositif d'une longueur déterminée,

qu'il y a un passage (4) et (5) entre deux transporteurs voisins d'une voie,

que les passages (4, 5) entre les transporteurs sont mobiles dans la direction d'acheminement ou dans la direction opposée,

que la vitesse de chacun des transporteurs (1, 2, 3) dans les différentes voies est changeable simultanément ou indépendamment les uns des autres,

que la vitesse de chacun des transporteurs (1, 2, 3) dans la même voie est changeable indépendamment les uns des autres.

5. Dispositif selon la spécification 4, caractérisé par le fait que les transporteurs (1, 2, 3) sont des courroies circulaires mues sur des rouleaux de renvoi mobiles.

6. Dispositif selon la spécification 4 et/ou 5, caractérisé par le fait que d'autres passages (6 et 7) sont coordonnés aux passages (4 et 5), à l'occasion de quoi un décalage amorcé dans les autres passages (6 et 7) provoque un même décalage et allant cependant dans le sens inverse des premiers passages (4 et 5).

7. Dispositif selon une des spécifications 4 à 6, caractérisé par le fait que le mouvement des passages (4 et 6) s'effectue relativement au mouvement des passages (5 à 7) dans une direction de marche et une vitesse divergentes pour chacun des passages et sur des parcours divergents les uns des autres.

8. Dispositif selon une des spécifications 4 à 7, caractérisé par le fait que les différents transporteurs (1, 2, 3) présentent des longueurs totales divergentes les unes des autres.

9. Dispositif selon une des spécifications 4 à 8, caractérisé par le fait que le déplacement des passages s'effectue par des entraînements linéaires ou des entraînements à mécanismes de traction.

10. Dispositif selon une des spécifications 4 à 9, caractérisé par le fait que le mécanisme de traction et ceux des courroies, des cordons, des courroies de commande, des courroies dentées ou des chaînes des transporteurs sont combinés entre eux dans leur utilisation.

11. Dispositif selon une des spécifications 4 à 10, caractérisé par le fait que la tension de la bande transporteuse de tous les transporteurs (1, 2, 3) d'une voie s'effectue par le déplacement d'un seul rouleau.

12. Dispositif selon une des spécifications 4 à 11, caractérisé par le fait que l'entraînement du transporteur (2) s'effectue, en cas de construction solide, par un rouleau, et que d'autres rouleaux (28 et 29) sont disponibles.

13. Dispositif selon une des spécifications 4 à 12, caractérisé par le fait que les mécanismes d'entraînement aux passages (4 et 5) et, le cas échéant, à d'autres passages (6 et 7) sont conduits sur roues, rouleaux ou choses similaires qui sont portés par un arbre commun.

14. Dispositif selon une des spécifications 4 à 13, caractérisé par le fait que la commande du dispositif, particulièrement la direction de marche des passages (4, 5) et de la vitesse de marche des passages (4, 5) et du mécanisme d'entraînement des transporteurs (1, 2, 3) s'effectue, adaptativement, par un ordinateur programmable, et la saisie sensorielle s'accomplit photoélectriquement ou électriquement.

15. Dispositif selon une des spécifications 4 à 14, caractérisé par le fait qu'un transporteur (2) est composé de deux transporteurs partiels (2a, 2b) qui sont aménagés l'un derrière l'autre et dont l'entraînement s'effectue synchroniquement.

16. Dispositif selon une des spécifications 4 à 15, caractérisé par le fait que seulement une voie unique du dispositif décrit est utilisée pour la charge de la chaîne, par exemple d'une machine d'emballage.

Fig. 1

EP 0 259 733 B1

Fig. 2

u.s.w.

Fig. 3

EP 0 259 733 B1

2   30   34
18        19

Fig. 4

29  32        28

4, 5, 6, 7

Fig. 5

Fig. 6

Fig. 7 (Teilvorrichtung Zulaufseite)